# NEUE EUROPÄISCHE PATENTSCHRIFT

(11) **EP 1 699 612 B2**
(45) Veröffentlichungstag und Bekanntmachung des Hinweises auf die Entscheidung über den Einspruch: **28.11.2018**
(45) Hinweis auf die Patenterteilung: 16.04.2014
(21) Anmeldenummer: 04819183.7
(22) Anmeldetag: 28.10.2004
(51) Int. Cl.: B29C 45/14, B32B 15/08, C09J 5/06

(54) **BAUTEIL MIT KUNSTSTOFF-METALL-VERBUND UND HERSTELLUNG DES BAUTEILS**
PLASTIC-METAL COMPOSITE COMPONENT AND PRODUCTION THEREOF
COMPOSITE EN PLASTIQUE-METAL ET PROCEDE DE FABRICATION

(30) Priorität: 22.12.2003 DE 10361096
(43) Veröffentlichungstag der Anmeldung: 13.09.2006
(73) Patentinhaber: ROBERT BOSCH GMBH, 70442 Stuttgart (DE)
(72) Erfinder: AICHELE, Wilfried, 71364 Winnenden (DE); BALD, Rolf, 74206 Bad Wimpfen (DE)
(86) Internationale Anmeldenummer: PCT/DE2004/002401
(87) Internationale Veröffentlichungsnummer: WO 2005/061203

(56) Entgegenhaltungen:
- EP-A- 0 126 403
- EP-A- 0 641 643
- EP-A- 1 488 958
- WO-A1-00/59990
- DE-A1- 2 450 214
- DE-A1- 10 158 896
- DE-U1- 29 520 505
- US-A1- 2002 150 776
- PATENT ABSTRACTS OF JAPAN Bd. 018, Nr. 037 (M-1545), 20. Januar 1994 (1994-01-20) -& JP 05 269787 A (TOSHIBA CHEM CORP; others: 01), 19. Oktober 1993 (1993-10-19)
- KÄUFER, HELMUT: "Arbeiten mit Kunststoffen" 1981, SPRINGER-VERLAG , BERLIN , XP002322008 aus Kapitel 8.2.1: Stoff-, form- und kraftschlüssige Verbindungen Seite 221; Tabelle 8.1

## Beschreibung

### Stand der Technik

Die Erfindung betrifft ein Bauteil, welches wenigstens bereichsweise aus Metall gebildet ist, wobei der metallische Bereich wenigstens teilweise mit thermoplastischem Kunststoff umspritzt ist.

Bauteile der eingangs genannten Art werden mittels an sich bekannter Spritzgießverfahren hergestellt, bei denen grundsätzlich Kunststoffformteile aus Formmassen hergestellt werden. Dabei werden beispielsweise pulver-oder granulatförmige Spritzgießmassen durch eine Spritzgießmaschine plastifiziert und mit hohem Druck in die formgebende Höhlung des Spritzgießwerkzeuges gespritzt. Eine dabei eingesetzte und meist vollautomatisch arbeitende Spritzgießmaschine besteht unter anderem aus einer Spritzeinheit, die einen beheizten Zylinder, Kolben oder Schneckenkolben sowie Vorratsbehälter und Antriebsaggregate umfasst, die die Formmasse dosiert, plastifiziert und in das geschlossene Werkzeug einspritzt. Des Weiteren umfasst die Spritzgießmaschine eine Schließeinheit, die das Werkzeug schließt und öffnet.

Darüber hinaus eignen sich Spritzgießverfahren in besonderer Weise dazu, mehrere Komponenten in einem Arbeitsgang zu verbinden, wobei sowohl unterschiedliche als auch gleiche Werkstoffe miteinander verbunden werden. Mehrere miteinander zu verbindende Einzelteile können vorgefertigt sein und dann mit Kunststoff zusammengebracht werden. In diesem Zusammenhang wird auf die sogenannte Hybridtechnik, die Insert- und die Outserttechnik hingewiesen, die auf dem Einlegen von metallischen Strukturen in ein Spritzgießwerkzeug und einem anschließenden Über- oder Umspritzen der metallischen Strukturen mit thermoplastischen Kunststoffen beruhen.

Diese Techniken werden beispielsweise zur Herstellung von Karosserieteilen im Automobilbau, wie Frontends, von mit thermoplastischen Kunststoffen umspritzten Metallbuchsen sowie von in aus thermoplastischen Kunststoffen hergestellten Steckern oder Gehäusen angeordneten metallischen Pins, welche für elektronische Schaltgeräte verschiedenster Bauarten eingesetzt werden, verwendet.

Sowohl bei der Hybridtechnik als auch bei der Insert- und der Outserttechnik bildet sich in der Schmelze an der Grenzfläche zum Metall beim Auftreffen der Thermoplastschmelze auf einem Metallteil, dessen Temperatur deutlich unterhalb des Schmelzpunktes des thermoplastischen Kunststoffes liegt, sofort eine dünne Haut aus erstarrtem bzw. abgeschrecktem thermoplastischen Kunststoff aus. Diese sich während des Einspritzvorgangs ausbildende Randschicht haftet nachteilhafterweise nicht in gewünschter Art und Weise an dem umspritzten bzw. überspritzten Metallteil bzw. metallischen Bereich eines Bauteiles. Beim anschließenden weiteren Abkühlen erstarrt die gesamte Schmelze des thermoplastischen Kunststoffes im Spritzgießwerkzeug unter Verringerung ihres Volumens.

Da die Schmelze an der Oberfläche des metallischen Bereichs des Bauteils nicht haftet, bewirkt der Volumenschwund des thermoplastischen Kunststoffes, dass sich der thermoplastische Kunststoff zumindest teilweise von dem metallischen Bereich ablöst. Dieser Effekt gewährleistet einerseits zwar eine gute Entformbarkeit von thermoplastischen Kunststoffen aus metallischen Spritzwerkzeugen. Andererseits steht er jedoch einer flüssigkeits- oder gasdichten Umspritzung von metallischen Einlegeteilen, wie Pins von Steckern oder Steuergeräten, entgegen.

Bei einem Umspritzen von Metallteilen bildet sich - im Vergleich zu Klebeverbindungen - nicht nur keine nennenswerte Adhäsion zwischen dem thermoplastischen Kunststoff und einem metallischen Einlegeteil aus, sondern es entstehen partiell auch dünne Spalte zwischen den umspritzten metallischen Bereichen eines Bauteiles und dem thermoplastischen Kunststoff. Die fehlende bzw. nur schwach ausgebildete Adhäsion zwischen dem Kunststoff und einem metallischen Bereich eines Bauteiles ermöglichen so gut wie keine Übertragung von Zug- oder Scherspannungen zwischen dem Kunststoff und dem metallischen Bereich.

Dieser an sich bekannten Problematik wird in der Praxis durch eine entsprechende Gestaltung der thermoplastischen Kunststoffschicht, der Einlegeteile und des jeweils verwendeten Spritzgießwerkzeuges sowie durch entsprechend eingestellte Verfahrensparameter beim Spritzgießen dahingehend entgegengewirkt, dass die vorbeschriebenen Spalte vor allem bezüglich ihrer Höhe verringert werden. Da jedoch die metallischen Bereiche von Bauteilen und die darauf mittels Spritzgießen angeordneten thermoplastischen Kunststoffe nicht aneinander haften, ist eine Verbesserung der Dichtheit zwischen diesen durch die letztgenannten Maßnahmen nur in begrenztem Umfang möglich.

Die fehlende Haftung zwischen einem thermoplastischen Kunststoff und einem metallischen Bereich eines Bauteiles führt insbesondere bei stark voneinander abweichenden thermischen Ausdehnungskoeffizienten des Kunststoffes und des metallischen Bereiches in Verbindung mit der im Betrieb des Bauteils auftretenden Nachschwindung des thermoplastischen Kunststoffes zu einer nicht vorhersehbaren Änderung der Leckrate während der Betriebsdauer, so dass Bauteile, deren Funktionsweise nur mit geringen Leckraten gewährleistet ist, nachträglich, d. h. nach dem Spritzgießen, durch geeignete Maßnahmen im Bereich zwischen dem thermoplastischen Kunststoff und den metallischen Bereichen abgedichtet werden müssen. Dazu werden häufig niedrigviskose Vergussmassen auf Basis von Epoxidharzen oder Silikonen eingesetzt, die in die vorbeschriebenen Spalte eingebracht werden bzw. eindringen und bei optimalem Verlauf nach dem Aushärten in gewünschter Art und Weise auf den metallischen Bereichen und auch auf den thermoplastischen Kunststoffen haften.

Des Weiteren werden in der Praxis zur Abdichtung von metallischen Durchführungen vorzugsweise thermoplastische Schmelzkleber auf heiße Metallteile aufgebracht, wobei die derart vorbereiteten Metallteile anschließend mit dem thermoplastischen Kunststoff umspritzt werden. Dabei haftet der Schmelzkleber auf dem metallischen Bereich und der thermoplastische Kunststoff auf dem Schmelzkleber.

Die letztgenannte Lösung weist jedoch den Nachteil auf, dass die Schmelzkleber nachteilhafterweise nur eine geringe Temperatur- und Lösungsmittelbeständigkeit aufweisen, welche durch die Verwendung eines unter Feuchtigkeit nachvernetzenden Schmelzklebers verbessert werden können. Nach dem Umspritzen der metallischen Bereiche und der darauf angeordneten und unter Feuchtigkeit nachvernetzenden Schmelzkleber mit dem thermoplastischen Kunststoff ist der Zutritt von Feuchtigkeit zu dem Schmelzkleber jedoch derart behindert, dass die Nachvernetzung des Schmelzklebers Wochen oder Monate dauern kann und eine Verwendung eines derart hergestellten Bauteiles direkt nach der Fertigung nicht möglich ist.

Der Einsatz von thermoplastischen Beschichtungen für metallische Substrate ist auch aus der US 6,494,983 B1 bekannt, bei der in Stahlbehältern anstatt einer PVC-Auskleidung eine Schicht aus einem thermoplastisch Kunststoff vorgesehen wird. Da die thermoplastische Kunststoffschicht nicht diffusionsdicht ist und deshalb bei Anwesenheit von aggressiven Medien das Metall unter der Thermoplastschicht korrodieren kann, wird vorgeschlagen, die Metalloberfläche durch einen duroplastischen Korrosionsschutz-Anstrich zu schützen. Da thermoplastische Kunststoffe auf ausgehärteten Duroplasten nicht haften, wird dem duroplastischen Korrosionsschutz-Anstrich bzw. dem duroplastischen Beschichtungslack eine bestimmte Menge eines thermoplastischen Kunststoffpulvers zugesetzt. Nach dem Aushärten des Beschichtungslackes sind die Partikel des thermoplastischen Kunststoffpulvers in der Duroplast-Matrix des Beschichtungslackes eingebettet.

Die thermoplastische Kunststoffauskleidung des Stahlbehälters wird auf den duroplastischen Korrosionsschutz-Anstrich heiß aufgesiegelt, wobei die aufgesiegelte thermoplastische Kunststoffschicht mit den thermoplastischen Kunststoffpulverteilchen an der Oberfläche des duroplastischen Beschichtungslackes zumindest an der Lackoberfläche verschweißen. Da die thermoplastischen Kunststoffpulverteilchen in der Matrix des duroplastischen Beschichtungslackes eingebettet sind, wird eine kraftschlüssige Verbindung zwischen dem Beschichtungslack und der aufgesiegelten plastischen Kunststoffschicht erreicht, wobei diese Ausgestaltung einen hohen Fertigungsaufwand und hohe Herstellkosten aufweist.

Aus dem US 2002/150776 A1 ist ein Bauteil bekannt, welches wenigstens bereichsweise aus Metall gebildet ist, wobei der metallische Bereich wenigstens teilweise mit einer thermoplastischen Kunststoffschicht umspritzt ist und zwischen der Kunststoffschicht und dem metallischen Bereich wenigstens bereichsweise eine wenigstens an seiner der Kunststoffschicht zugewandten Seite aus einem thermoplastischen Material bestehende Haftvermittlerschicht angeordnet ist, mittels der zwischen dem metallischen Bereich und der Kunststoffschicht eine kraftschlüssige Verbindung vorliegt. Ähnliche Bauteile sind aus der EP-A-0 126 403, der DE 24 50 214 A, der JP 05 269787 A, dem EP-A-0 641 643 sowie dem DE 295 20 505 U1 bekannt. Darüber hinaus ist es beispielsweise aus der ebenfalls US 2002/150776 A1 bekannt, die Haftvermittlerschicht mit einer derartigen Dicke auszustatten, dass die Haftvermittlerschicht in einem der Kunststoffschicht zugewandten Oberflächenbereich während des Spritzprozesses der Kunststoffschicht derart anschmilzt, dass der der Kunststoffschicht zugewandte Oberflächenbereich der Haftvermittlerschicht wenigstens bereichsweise mit der Kunststoffschicht verschweißt.

### Vorteile der Erfindung

Das erfindungsgemäße Bauteil mit den Merkmalen des Patentanspruches 1, welches wenigstens bereichsweise aus Metall gebildet ist und bei dem der metallische Bereich wenigstens teilweise mit thermoplastischem Kunststoff umspritzt ist, weist vorteilhafterweise eine kraftschlüssige Verbindung zwischen dem Metall und dem thermoplastischen Kunststoff auf. Damit sind Bauteile, die aus mehreren, vorzugsweise metallischen Komponenten bestehen, über einen Spritzgießprozess derart miteinander verbindbar, dass die Verbindung auch mechanischen Belastungen wie Zug- oder Scherbeanspruchungen, ausgesetzt werden können, ohne dass die Funktionsweise eines Bauteiles beeinträchtigt wird oder die Verbindung zwischen den Bauteilen und dem darauf gespritzten Kunststoff gelöst wird.

Die vorbeschriebenen Vorteile eines erfindungsgemäß ausgestalteten bzw. eines erfindungsgemäß hergestellten Bauteiles werden dadurch erreicht, dass zwischen dem thermoplastischen Kunststoff und dem metallischen Bereich eines erfindungsgemäß ausgeführten Bauteiles wenigstens bereichsweise eine wenigstens an seiner dem Kunststoff zugewandten Seite aus einem thermoplastischen Material bestehende Haftvermittlerschicht angeordnet ist, mittels der zwischen dem metallischen Bereich und dem Kunststoff eine kraftschlüssige Verbindung vorliegt.

Mit dem Verfahren zum Herstellen eines erfindungsgemäß ausgeführten Bauteiles wird wenigstens auf einem Teil des metallischen Bereichs eines Bauteiles eine Haftvermittlerschicht aufgebracht, die mit dem metallischen Bereich wenigstens eine kraftschlüssige Verbindung ausbildet. Des Weiteren wird ein thermoplastischer Kunststoff auf den metallischen Bereich bzw. auf die Haftvermittlerschicht derart aufgespritzt, dass wenigstens der dem thermoplastischen Kunststoff zugewandte Oberflächenbereich der auf dem metallischen Bereich des Bauteils angeordneten Haftvermittlerschicht von dem plastifizierten Kunststoff angeschmolzen wird und mit dem aufgespritzten Kunststoff wenigstens bereichsweise verschweißt wird. Damit treten zwischen beispielsweise als Metalleinlegeteile ausgebildeten Bauteilen und einem thermoplastischen Kunststoff keine Spalte mehr auf und es entsteht eine kraftschlüssige Verbindung, die trotz der unter Umständen unterschiedlichen thermischen Ausdehnungskoeffizienten des thermoplastischen Kunststoffes und des metallischen Bereichs auch bei Temperaturänderungen erhalten bleibt.

Weitere Vorteile und vorteilhafte Ausgestaltungen des Gegenstandes nach der Erfindung sind der Beschreibung, der Zeichnung und den Patentansprüchen entnehmbar.

### Zeichnung

Zwei Ausführungsbeispiele des Gegenstandes nach der Erfindung sind in der Zeichnung näher dargestellt und werden in der nachfolgenden Beschreibung näher erläutert. Es zeigen
Figur 1 ein erfindungsgemäß ausgeführtes Bauteil mit einer Haftvermittlerschicht, die aus einer Einzelschicht besteht; und
Figur 2 ein weiteres Ausführungsbeispiel eines erfindungsgemäß ausgeführten Bauteiles, bei welchem die Haftvermittlerschicht aus zwei Einzelschichten gebildet ist.

### Beschreibung des Ausführungsbeispiels

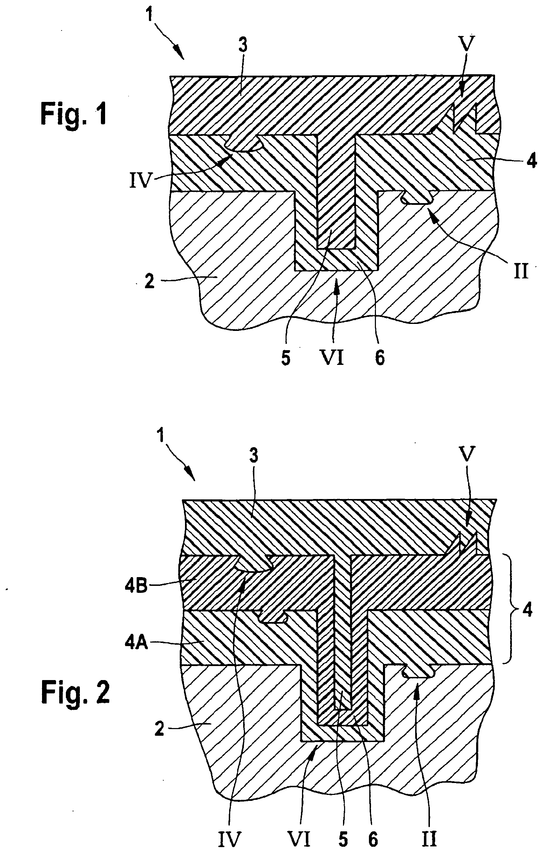

Bezug nehmend auf Figur 1 ist ein metallischer Bereich 2 eines Bauteiles 1 dargestellt, der mit einer thermoplastischen Kunststoffschicht 3 umspritzt ist. Zwischen dem metallischen Bereich 2 des Bauteiles 1 und der thermoplastischen Kunststoffschicht ist eine Haftvermittlerschicht 4 angeordnet, welche sowohl mit dem metallischen Bereich 2 als auch mit der thermoplastischen Kunststoffschicht 3 eine kraftschlüssige Verbindung eingeht.

Zusätzlich weist sowohl der metallische Bereich 2 in einem Bereich II als auch die Haftvermittlerschicht 4 in einem Bereich IV Aussparungen auf, wobei in die Aussparung des metallischen Bereichs 2 die Haftvermittlerschicht 4 und in die Aussparung der Haftvermittlerschicht 4 die thermoplastische Kunststoffschicht 3 derart eingreift, dass zwischen der Haftvermittlerschicht 4 und dem metallischen Bereich 2 sowie zwischen der Haftvermittlerschicht 4 und der Kunststoffschicht 3 jeweils zusätzlich zu der kraftschlüssigen Verbindung auch eine formschlüssige Verbindung vorliegt. Die formschlüssigen Verbindungen ergeben sich daraus, dass die Aussparungen des metallischen Bereichs 2 sowie die Aussparungen der Haftvermittlerschicht 4 Hinterschneidungen aufweisen, in welche die Haftvermittlerschicht 4 bzw. die thermoplastische Kunststoffschicht 3 in verankernder Art und Weise eingreifen.

Zusätzlich ist in einem Bereich VI zwischen dem metallischen Bereich 2 des Bauteiles 1 und der Kunststoffschicht 3 sowie mit der Haftvermittlerschicht 4 jeweils eine weitere formschlüssige Verbindung vorgesehen. Dabei ist die weitere formschlüssige Verbindung zwischen der Kunststoffschicht 3 bzw. der Haftvermittlerschicht 4 und dem metallischen Bereich 2 durch jeweils einen in den Bereich des metallischen Bereichs 2 vorkragenden Steg 5 der Kunststoffschicht 3 bzw. einen hülsenartigen Steg 6 der Haftvermittlerschicht 4 ausgeführt, wobei der Steg 5 der Kunststoffschicht 3 in den hülsenartigen Steg 6 der Haftvermittlerschicht 4 eingreift, der ebenfalls in den metallischen Bereich 2 vorkragt.

Die Ausgestaltung der formschlüssigen Verbindungen im Bereich VI ist durch geeignete Herstellverfahren, wie beispielsweise Aufbringen der Haftvermittlerschicht 4 durch Lackieren und Aufbringen der Kunststoffschicht durch Spritzgießen, erreichbar, wobei es selbstverständlich im Ermessen des Fachmannes liegt, das jeweils geeignete Verfahren in Abhängigkeit des jeweils vorliegenden Anwendungsfalles auszuwählen.

Durch die formschlüssigen Verbindungen zwischen dem metallischen Bereich 2 und den Schichten 3 bzw. 4 im Bereich VI wird ein Schichtverbund geschaffen, der in erhöhtem Maße aus an dem Bauteil 1 angreifenden Beanspruchungen resultierenden Tangentialkräfte aufnehmen kann, ohne dass sich die Verbindungen zwischen dem metallischen Bereich 2 und der Haftvermittlerschicht 4 sowie der Kunststoffschicht 3 lösen bzw. aufgebrochen werden.

Die Haftvermittlerschicht 4 ist vorliegend aus einem thermoplastischen Material gebildet, welche auf dem metallischen Bereich 2 haftet und beim Umspritzen mit dem thermoplastischen Kunststoff in den der thermoplastischen Kunststoffschicht 3 zugewandten Oberflächenbereichen wenigstens bereichsweise mit der thermoplastischen Kunststoffschicht derart verschweißt, dass zwischen dem metallischen Bereich 2 und der thermoplastischen Kunststoffschicht 3 keine Spalte auftreten und eine kraftschlüssige Verbindung zwischen der thermoplastischen Kunststoffschicht 3 und der Haftvermittlerschicht 4 und damit letztendlich auch zwischen der thermoplastischen Kunststoffschicht 3 und dem metallischen Bereich 2 vorliegt.

Der während des Spritzvorganges der thermoplastischen Kunststoffschicht 3 auftretende Verschweißprozess zwischen der Haftvermittlerschicht 4 und der thermoplastischen Kunststoffschicht wird durch eine strukturierte Oberfläche der Haftvermittlerschicht 4 unterstützt, wobei die Struktur der Oberfläche der Haftvermittlerschicht 4 bereits beim Formbildungsprozess der Haftvermittlerschicht 4 in Form so genannter und in der Zeichnung in einem Bereich V dargestellter Anschmelzspitzen ausbildbar ist.

Die Haftvermittlerschicht 4 ist vorliegend mit einer derartigen Elastizität ausgeführt, dass bei materialbedingt unterschiedlichen thermischen Ausdehnungskoeffizienten der thermoplastischen Kunststoffschicht 3 und des metallischen Bereiches 2 die kraftschlüssige Verbindung zwischen dem metallischen Bereich 2 und der thermoplastischen Kunststoffschicht 3 erhalten bleibt. Das bedeutet, dass thermisch bedingte Spannungen aufgrund eines unterschiedliches Ausdehnungsverhalten der thermoplastischen Kunststoffschicht 3 und des metallischen Bereiches 2 durch die einen niedrigen Schubmodul und eine hohe Scherung bis zum Bruch aufweisende Haftvermittlerschicht 4 abgebaut werden.

Bei dem in Figur 1 dargestellten Bauteil 1 handelt es sich um ein beliebiges Metalleinlegeteil, welches vor dem Umspritzen mit der thermoplastischen Kunststoffschicht 3 ganz oder teilweise mit der Haftvermittlerschicht 4 versehen wird, wobei die dem metallischen Bereich 2 zugewandte Oberfläche der Haftvermittlerschicht 4 auf dem Metall haftet und die der thermoplastischen Kunststoffschicht 3 zugewandte Oberfläche der Haftvermittlerschicht 4 selbst aus thermoplastischem Material gebildet ist und beim Umspritzen mit dem thermoplastischen Kunststoff der Kunststoffschicht 3 mit dem plastifizierten Kunststoff wenigstens bereichsweise verschweißt.

Eine Reduzierung der Herstellkosten ist erreichbar, wenn die Haftvermittlerschicht 4 unmittelbar vor oder nach einem Ausstanzprozess von Einlegeteilen aus Blechstreifen aufgebracht wird, da zu diesem Fertigungszeitpunkt das Handling der Metalleinlegeteile erleichtert ist. Dieser Vorteil wird dadurch erreicht, dass beispielsweise mehrere in einer Ebene liegende Steckerpins durch eine Beschichtungsfolie verbunden werden und der Verbund aus der Haftvermittlerschicht und den Metallpins eine in der Praxis häufig praktizierte Herstellung eines Vorspritzlings obsolet macht.

In Figur 2 ist ein weiteres Ausführungsbeispiel eines erfindungsgemäß ausgeführten Bauteiles 1 gezeigt, wobei die zwischen der thermoplastischen Kunststoffschicht 3 und dem metallischen Bereich 2 des Bauteiles 1 angeordnete Haftvermittlerschicht 4 aus zwei Einzelschichten 4A und 4B besteht. Dabei ist die erste Einzelschicht 4A der Haftvermittlerschicht 4 aus einem Material gebildet, welches mit dem metallischen Bereich 2 sowie der zweiten Einzelschicht 4B der Haftvermittlerschicht 4 eine kraftschlüssige Verbindung eingeht. Die zweite Einzelschicht 4B besteht aus einem thermoplastischen Material, welches sowohl mit der ersten Einzelschicht 4A der Haftvermittlerschicht 4 als auch mit der thermoplastischen Kunststoffschicht 3 eine kraftschlüssige Verbindung eingeht.

Auch bei dieser Ausführungsform des Bauteils 1 sind in den Bereichen II, IV und VI zwischen dem metallischen Bereich 2 des Bauteils 1 und den darauf angeordneten Schichten 3, 4A und 4B zusätzlich zu den kraftschlüssigen Verbindungen auch die zu Figur 1 beschriebenen formschlüssigen Verbindungen vorgesehen, um eventuelle an dem Bauteil 1 angreifende Tangentialkräfte in erhöhtem Umfang aufnehmen zu können, ohne dass die Verbindungen zwischen den einzelnen auf dem metallischen Bereich 2 vorhandenen Schichten 3, 4A und 4B sowie zwischen dem metallischen Bereich 2 und der Haftvermittlerschicht 4 bzw. der Kunststoffschicht 3 gelöst werden.

Dabei weist die zweite Einzelschicht 4B grundsätzlich auf ihrer der thermoplastischen Kunststoffschicht 3 zugewandten Oberflächenseite dieselben Eigenschaften wie die in der Beschreibung zu Figur 1 näher beschriebene Haftvermittlerschicht 4 auf. Das bedeutet, dass die zweite Einzelschicht 4B wenigstens bereichsweise beim Umspritzen des metallischen Bereichs mit der thermoplastischen Kunststoffschicht 3 mit der thermoplastischen Kunststoffschicht 3 verschweißt und die kraftschlüssige Verbindung zwischen der zweiten Einzelschicht 4B und der Kunststoffschicht 3 aufgrund von Adhäsionskräften vorliegt.

Die lediglich aus einer Schicht bestehende Haftvermittlerschicht 4 gemäß Figur 1 bzw. die aus mehreren Einzelschichten 4A, 4B bestehende Haftvermittlerschicht4 können jeweils entweder auf Blechbänder oder auf ausgestanzte Metalleinlegeteile aufgebracht werden, wobei letztgenannte häufig noch über Brücken zusammenhängen und dem Spritzgießbetrieb als Rollenware, d. h. als sogenannte Coils, geliefert werden.

Bei der Herstellung des Schichtenverbundes zwischen dem metallischen Bereich 2, der Haftvermittlerschicht 4 und der thermoplastischen Kunststoffschicht 3 ist es vorteilhaft, wenn die Haftung zwischen der Haftvermittlerschicht 4 und dem metallischen Bereich 2 vor dem Umspritzen der Haftvermittlerschicht 4 mit der thermoplastischen Kunststoffschicht 3 hergestellt wird.

Bei der Auswahl der mit der thermoplastischen Kunststoffschicht 3 zu verschweißenden Haftvermittlerschicht 4 bzw. der zweiten Einzelschicht 4B der Haftvermittlerschicht 4 gemäß Figur 2 ist darauf zu achten, dass der Schmelzpunkt der Haftvermittlerschicht 4 an ihrer der thermoplastischen Kunststoffschicht 3 zugewandten Oberfläche derart ist, dass die Haftvermittlerschicht 4 in ihrem der thermoplastischen Kunststoffschicht 3 zugewandten Bereich beim Spritzgießvorgang auf eine Temperatur gebracht wird, bei der ein Verschweißen mit der thermoplastischen Kunststoffschicht eintritt.

In Abhängigkeit eines Beanspruchungsprofils des Schichtverbundes des Bauteiles ist die Haftvermittlerschicht 4 auch nach weiteren Gesichtspunkten, wie einer Temperatur- und Medienbeständigkeit oder einer Kälteflexibilität, auszuwählen.

So sind beispielsweise Schmelzkleber auf Basis von PUR und PA, Polyester und Copolyester mit im Vergleich zu PET und PBT niedrigerem Schmelzpunkt, thermoplastische Polyurethane sowie ausgewählte thermoplastische Elastomere (TPE), Polyamide und Copolyamide, z. B. auf Basis von PA11 und PA12, sowie Polyetherblockamide (PEBA) bei einer aus Polyethylenterephthalat oder aus Polybutylenterephthalat gebildeten thermoplastischen Kunststoffschicht 3 als Haftvermittlerschicht 4 geeignet.

Besteht die thermoplastische Kunststoffschicht 3 aus PA6 oder PA66, besteht die Möglichkeit, die Haftvermittlerschicht 4 auf ihrer der thermoplastischen Kunststoffschicht 3 zugewandten Seite auf Basis von PUR und PA, PA11, PA12 und entsprechende flexible Copolyamide auf Basis von PA11 und PA12, Copolyamide auf Basis PA6 und PA66 mit im Vergleich zu PA6 und PA66 niedrigerem Schmelzpunkt oder ausgewählten thermoplastischen Elastomeren sowie aus thermoplastischen Polyurethanen auszuführen.

Die aufgeführten Haftvermittlersysteme stellen lediglich eine Auswahl aus einer Vielzahl möglicher Systeme dar, mittels welchen das vorbeschriebene physikalische Wirkprinzip realisierbar ist.

Nachfolgend werden verschiedene alternative Möglichkeiten vorgestellt, mittels welchen die thermoplastische Haftvermittlerschicht 4 in der gewünschten haftenden Art und Weise auf dem metallischen Bereich 2 des Bauteiles 1 aufgebracht werden kann.

So besteht die Möglichkeit, die Haftvermittlerschicht 4 als Beschichtungspulver auf den entsprechend vorgewärmten metallischen Bereich 2 mittels eines Pulversprüh- oder Wirbelsinterverfahrens auf den metallischen Bereich 2 aufzubringen, wobei bei höher schmelzenden Polymerpulvern die Beschichtungsprozesse bei Bedarf unter Schutzgas ausgeführt werden.

Alternativ hierzu kann die Haftvermittlerschicht 4 zunächst in Form eines in einer Flüssigkeit dispergierten Beschichtungspulvers auf den metallischen Bereich aufgetragen werden. Nach dem Auftragen wird die Flüssigkeit verdunstet und der metallische Bereich vorzugsweise unter Schutzgasatmosphäre kurzzeitig über die Sinter- oder Schmelztemperatur des Polymers der Haftvermittlerschicht 4 erwärmt, so dass die Haftvermittlerschicht auf dem metallischen Bereich haftet.

Eine weitere Möglichkeit, um eine auf dem metallischen Bereich fest haftende Haftvermittlerschicht zu erzeugen, stellt das Eintauchen des vorgewärmten metallischen Bereichs 2 in eine Polymerschmelze dar. Dieses Verfahren zum Auftragen der Haftvermittlerschicht 4 auf den metallischen Bereich 2 ist für Polymere geeignet, die sich oberhalb ihrer Schmelztemperatur nur langsam zersetzen bzw. nur in geringem Umfang oxidiert werden.

Besteht die Haftvermittlerschicht 4 aus einem Schmelzkleber, der einen verhältnismäßig niedrigeren Schmelzpunkt aufweist, ist dies ohne Weiteres möglich. Wird als Haftvermittlerschicht 4 ein höher schmelzender Thermoplast verwendet, ist die Thermoplastschmelze durch eine Schutzgasglocke vor Feuchtigkeit und Sauerstoff zu schützen.

Weiter alternativ hierzu kann die Haftvermittlerschicht 4 während eines kontinuierlichen Prozesses als Polymerschmelze auf den vorgewärmten metallischen Bereich aufgerakelt werden, wobei zur Vermeidung einer eventuell auftretenden oberflächlichen Oxidation des metallischen Bereiches 2 sowie einer oxidativen oder hydrolytischen Schädigung der polymeren Haftvermittlerschicht die Strecke des Bauteiles, in der der metallische Bereich 2 aufgeheizt und gemeinsam mit der aufgetragenen Haftvermittlerschicht 4 abgekühlt wird, unter Schutzgas geführt werden sollte.

Des Weiteren kann es vorgesehen sein, dass der metallische Bereich 2 in einem nahe der Schmelztemperatur des Materials der Haftvermittlerschicht 4 temperierten Spritzgießwerkzeug mit der Haftvermittlerschicht 4 umspritzt wird und die Haftvermittlerschicht 4 durch Abkühlen des Spritzgießwerkzeuges bzw. des Spritzgießwerkzeugeinsatzes während eines variothermen Prozesses abgekühlt wird und erstarrt.

Alternativ hierzu besteht auch die Möglichkeit, den metallischen Bereich 2 im geschlossenen Spritzgießwerkzeug auf die Schmelztemperatur des Polymers, aus welchem die Haftvermittlerschicht 4 gebildet ist, durch elektrischen Strom zu erwärmen. Nach dem Umspritzen des metallischen Bereichs 2 mit der Haftvermittlerschicht 4 wird die Bestromung des metallischen Bereiches 2 beendet und der Schichtverbund des Bauteiles 1 kühlt über die temperierte Werkzeugwand des Spritzgießwerkzeuges ab.

Wird der metallische Bereich des Bauteiles 1 vorzugsweise partiell mit dem als Haftvermittlerschicht 4 dienenden thermoplastischen Material unter aus der Praxis herkömmlich bekannten Bedingungen beispielsweise zur Herstellung eines Vorspritzlings umspritzt, so sind der metallische Bereich und das thermoplastische Material der Haftvermittlerschicht nach dem Umspritzen noch nicht kraftschlüssig verbunden. Wird der umspritzte metallische Bereich 2 nach dem Umspritzen kurzzeitig mindestens auf die Schmelztemperatur des thermoplastischen Materials der Haftvermittlerschicht 4, beispielsweise durch elektrische Heizplatten oder durch einen induzierten Strom, erwärmt, bildet sich zwischen dem als Haftvermittlerschicht 4 dienenden thermoplastischen Material und dem metallischen Bereich 2 eine Verklebung aus. Dabei ist die Erwärmung zeitlich derart vorgesehen, dass das thermoplastische Material der Haftvermittlerschicht 4 die Oberfläche des metallischen Bereiches 2 hinreichend gegen Oxidation schützen kann und das Erwärmen des Schichtverbundes unter normaler Atmosphäre durchgeführt werden kann.

Bei einem weiteren alternativen Verfahren, mittels dem die Haftvermittlerschicht 4 auf den metallischen Bereich 2 des Bauteiles 1 aufgebracht werden kann, wird zunächst ein in einem Lösungsmittel gelöstes Polymer auf den metallischen Bereich 2 aufgebracht. Anschließend wird der Polymerfilm getrocknet und der metallische Bereich 2 nahe der Schmelztemperatur des Polymers, vorzugsweise unter Schutzgasatmosphäre erwärmt, wobei der wesentlich unterhalb der Schmelztemperatur des Polymers getrocknete Polymerfilme auf dem metallischen Bereich nicht haftet.

Werden die vorgenannten Polymerfilme beispielsweise durch Lösen von PBT oder PA66 in Hexafluorisopropanol (HFIP) bei Raumtemperatur und einem Aufbringen der Lösung auf den metallischen Bereich 2 sowie einem anschließenden Verdunsten des Lösungsmittels unter Vakuum auf dem metallischen Bereich 2 erzeugt, haften derartige Polymerfilme auf dem metallischen Bereich nicht. Wird hingegen der metallische Bereich 2 und der Polymerfilm nahe der Schmelztemperatur der Polymere auf ca. 225°C bzw. 265°C erwärmt, bildet sich zwischen dem metallischen Bereich 2, der beispielsweise aus CuSn6 bzw. Sn gebildet sein kann, und dem Polymerfilm eine Haftung bzw. eine kraftschlüssige Verbindung aus. Weiterhin kann die Haftvermittlerschicht 4 durch ein Auflaminieren entsprechender Polymerfolien auf den unter Ausschluss von Sauerstoff über den Schmelzpunkt des Polymers erwärmten metallischen Bereich 2 aufgebracht werden. Nach dem Auflaminieren der Polymerfolie ist die Oberfläche des metallischen Bereichs 2 gegen eine kurzzeitige Einwirkung von Sauerstoff geschützt, so dass das Abkühlen des Schichtverbundes auf Raumtemperatur ohne Schutzgasatmosphäre erfolgen kann.

So besteht beispielsweise die Möglichkeit, einen metallischen Bereich aus CuSn6 und Sn bei 190°C mit einer Copolyamidfolie, wie einer Folie aus Polyetherblockamid oder PEBA, einschnittig überlappend zu verkleben, wobei sich bei einer Schichtdicke des Klebers von 0,03 mm Zugscherfestigkeiten von 9,0 MPa mit CuSn6 und 7,7 MPa mit Sn ergeben.

Eine weitere alternative Möglichkeit stellt die Herstellung der Haftvermittlerschicht 4 durch eine Polymerisation von Monomeren oder Oligomeren, wie thermoplastisches PUR, PA12 oder cyklische Oligomeren, auf dem metallischen Bereich 2 dar. Bei der Polymerisation von Thermoplasten aus Monomeren oder aus Oligomeren auf der Oberfläche des metallischen Bereichs 2 bildet sich eine Haftung zwischen dem Thermoplast und dem Metall aus.

Während für die Polymerisation von Caprolactam zu PA6 und von Laurinlactam zu PA12 eine Schutzgasatmosphäre zwingend erforderlich ist, ist die Polymerisation von cyklischen Oligomeren auch unter normaler Atmosphäre möglich. Insbesondere erlaubt die Copolymerisation von cyklischen Oligomeren mit geeigneten Monomeren oder Oligomeren die Herstellung von Haftvermittlerschichten, welche flexibler sind als die entsprechenden Homopolymere und zusätzlich vorteilhafterweise einen niedrigeren Schmelzpunkt aufweisen. Derart hergestellte Copolymerschichten verschweißen beim Überspritzen der Haftvermittlerschicht 4 mit einer thermoplastischen Schmelze des entsprechenden Homopolymers.

Des Weiteren kann die Haftvermittlerschicht 4 auch aus einer auf dem metallischen Bereich 2 aufgeklebten Thermoplastfolie bestehen, wobei sich zur Vermeidung von Ofenprozessen der Einsatz von kalthärtenden Zwei-Komponenten-Klebern mit hoher Glasübergangstemperatur (Tg), wie 2K-Epoxidharzen, empfiehlt. Durch eine Nachhärtung nach dem Aufkleben der Polymerfolie erreichen die Klebeverbindungen eine erhöhte Beständigkeit gegen Lösungsmittel und auch eine erhöhte Temperaturbeständigkeit. Diese Nachhärtung kann unter Umständen auch erst im Betrieb des Bauteiles erfolgen, z. B. wenn dieses im Motorraum eines Kraftfahrzeuges eingesetzt wird.

Die Dicke der auf dem metallischen Bereich 2 aufgebrachten Haftvermittlerschicht 4 variiert in Abhängigkeit des jeweils vorliegenden Anwendungsfalles zwischen wenigen Mikrometern bis hin zu mehreren Millimetern, wobei die Dicke der Haftvermittlerschicht 4 auf jeden Fall derart ausgewählt werden sollte, dass während des Spritzgießvorganges der thermoplastischen Kunststoffschicht 3 nur soviel Wärme über die Haftvermittlerschicht 4 und den metallischen Bereich 2 abgeführt wird, dass das Aufschmelzen der Haftvermittlerschicht 4 in dem der thermoplastischen Kunststoffschicht 3 zugewandten Oberflächenbereich der Haftvermittlerschicht 4 nicht unterbleibt und ein Verschweißen zwischen der Haftvermittlerschicht 4 und der aufgespritzten thermoplastischen Kunststoffschicht 3 sicher gewährleistet ist.

Das vorbeschriebene erfindungsgemäße Verfahren kann sowohl in der Hybridtechnik als auch in der Insert- sowie Outserttechnik zur Herstellung von umspritzten Buchsen, Steckern für die Bordelektrik von Fahrzeugen, Steuergeräten oder auch mechatronischen Steuereinheiten, wie Getriebemodulen, eingesetzt werden.

Auf jeden Fall sind metallische Bereiche von Bauteile mit einer vorbeschriebenen Haftvermittlerschicht auf preisgünstige Art und Weise derart ausbildbar, dass der Schichtverbund aus einer thermoplastischen Kunststoffschicht, der Haftvermittlerschicht und dem metallischen Bereich nach dem Umspritzen des metallischen Bereichs mit der thermoplastischen Kunststoffschicht gas- und flüssigkeitsdicht ausgeführt ist.

## Patentansprüche

1. Bauteil (1), welches wenigstens bereichsweise aus Metall gebildet ist, wobei der metallische Bereich (2) wenigstens teilweise mit einer thermoplastischen Kunststoffschicht (3) umspritzt ist und zwischen der Kunststoffschicht (3) und dem metallischen Bereich (2) wenigstens bereichsweise eine wenigstens an seiner der Kunststoffschicht (3) zugewandten Seite aus einem thermoplastischen Material bestehende Haftvermittlerschicht (4) angeordnet ist, mittels der zwischen dem metallischen Bereich (2) und der Kunststoffschicht (3) eine kraftschlüssige Verbindung vorliegt, wobei die Haftvermittlerschicht (4) eine derartige Dicke aufweist, dass die Haftvermittlerschicht (4) in einem der Kunststoffschicht (3) zugewandten Oberflächenbereich während des Spritzprozesses der Kunststoffschicht (3) derart anschmilzt, dass der der Kunststoffschicht (3) zugewandte Oberflächenbereich der Haftvermittlerschicht (4) wenigstens bereichsweise mit der Kunststoffschicht (3) verschweißt, wobei die Haftvermittlerschicht (4) auf der der Kunststoffschicht (3) zugewandten Seite eine strukturierte Oberfläche aufweist, **dadurch gekennzeichnet, dass** die strukturierte Oberfläche der Haftvermittlerschicht (4) auf der der thermoplastischen Kunststoffschicht (3) zugewandten Seite Anschmelzspitzen aufweist, wobei die Anschmelzspitzen bei einem Formbildungsprozess der Haftvermittlerschicht (4) ausbildbar ausgebildet sind.

2. Bauteil nach Anspruch 1, **dadurch gekennzeichnet, dass** die Haftvermittlerschicht (4) mit einer derartigen Elastizität ausgeführt ist, dass unterschiedliche Wärmeausdehnungskoeffizienten des metallischen Bereichs (2) und der Kunststoffschicht (3) über die Haftvermittlerschicht (4) weitgehend ausgleichbar sind.

3. Bauteil nach Anspruch 1, **dadurch gekennzeichnet, dass** die Haftvermittlerschicht (4) aus mehreren Einzelschichten (4A, 4B) besteht, wobei wenigstens eine Einzelschicht (4A oder 4B) der Haftvermittlerschicht (4) eine derartige Elastizität aufweist, dass unterschiedliche Wärmeausdehnungskoeffizienten des metallischen Bereichs (2) und der Kunststoffschicht (3) über diese Einzelschicht (4A oder 4B) weitgehend abgebaut werden.

4. Bauteil nach Anspruch 3, **dadurch gekennzeichnet, dass** die dem metallischen Bereich (2) zugewandte Einzelschicht (4A) der Haftvermittlerschicht (4) mit dem metallischen Bereich (2) wenigstens bereichsweise kraftschlüssig verbunden ist und dass die der Kunststoffschicht (3) zugewandte Einzelschicht (4B) der Haftvermittlerschicht (4) mit der Kunststoffschicht (3) wenigstens bereichsweise verschweißt ist, wobei zwischen den Einzelschichten (4A, 4B) der Haftvermittlerschicht (4) jeweils wenigstens eine kraftschlüssige Verbindung vorliegt.

5. Bauteil nach einem der Ansprüche 1 bis 4, **dadurch gekennzeichnet, dass** die Schmelztemperatur der Haftvermittlerschicht (4) wenigstens in dem der Kunststoffschicht (3) zugewandten Oberflächenbereich kleiner oder gleich der Schmelztemperatur der Kunststoffschicht (3) ist.

6. Bauteil nach einem der Ansprüche 1 bis 5, **dadurch gekennzeichnet, dass** die Haftvermittlerschicht (4) wenigstens bereichsweise mit einem geringeren Elastizitätsmodul und einer höheren Reißdehnung ausgebildet ist als die Kunststoffschicht (3).

7. Bauteil nach einem der Ansprüche 3 bis 6, **dadurch gekennzeichnet, dass** die dem metallischen Bereich (2) zugewandte Einzelschicht (4A) der Haftvermittlerschicht (4) als härtender Kleber ausgeführt ist.

## Claims

1. Component (1) formed at least locally from metal, where the metallic region (2) has been overmoulded at least to some extent with a thermoplastics layer (3) and the arrangement has, between the plastics layer (3) and the metallic region (2), at least locally an adhesion-promoter layer (4) which is composed of a thermoplastic material at least at its side facing towards the plastics layer (3), and which brings about frictional bonding between the metallic region (2) and the plastics layer (3), where the thickness of the adhesion-promoter layer (4) is such that, during the process of injection of the plastics layer (3), the adhesion-promoter layer (4) undergoes incipient melting in a surface region facing towards the plastics layer (3) in such a way that, within the adhesion-promoter layer (4), the surface region facing towards the plastics layer (3) becomes welded at least locally to the plastics layer (3), where the adhesion-promoter layer (4) has a structured surface on the side facing towards the plastics layer (3), **characterized in that** the structured surface of the adhesion-promoter layer (4) has, on the side facing towards the thermoplastics layer (3), pointed elevations that aid fusion, where the pointed elevations that aid fusion can be configured during a process that forms the shape of the adhesion-promoter layer (4).

2. Component according to Claim 1, **characterized in that** the adhesion-promoter layer (4) has elasticity such that different coefficients of thermal expansion of the metallic region (2) and of the plastics layer (3) can be substantially compensated by way of the adhesion-promoter layer (4) .

3. Component according to Claim 1, **characterized in that** the adhesion-promoter layer (4) is composed of a plurality of individual layers (4A, 4B), where at least one individual layer (4A or 4B) of the adhesion-promoter layer (4) has elasticity such that different coefficients of thermal expansion of the metallic region (2) and of the plastics layer (3) are substantially compensated by way of the said individual layer (4A or 4B).

4. Component according to Claim 3, **characterized in that**, within the adhesion-promoter layer (4), the individual layer (4A) facing towards the metallic region (2) has frictional bonding at least locally to the metallic region (2), and that, within the adhesion-promoter layer (4) the individual layer (4B) facing towards the plastics layer (3) has been welded at least locally to the plastics layer (3), where at least frictional bonding is present between each of the individual layers (4A, 4B) of the adhesion-promoter layer (4).

5. Component according to any of Claims 1 to 4, **characterized in that** the melting point of the adhesion-promoter layer (4) is, at least in the surface region facing towards the plastics layer (3), lower than or equal to the melting point of the plastics layer (3).

6. Component according to any of Claims 1 to 5, **characterized in that** the adhesion-promoter layer (4) has, at least locally, a lower modulus of elasticity and a higher elongation at break than the plastics layer (3).

7. Component according to any of Claims 3 to 6, **characterized in that**, within the adhesion-promoter layer (4), the individual layer (4A) facing towards the metallic region (2) is a curing adhesive.

## Revendications

1. Composant (1) dont au moins certaines parties sont formées d'un métal,
au moins une partie de la partie métallique (2) étant englobée dans une couche (3) de matière synthétique thermoplastique,
une couche (4) d'agent de renforcement de l'adhérence, constituée d'un matériau thermoplastique et au moyen de laquelle une liaison en correspondance mécanique s'établit entre la partie métallique (2) et la couche (3) de matière synthétique étant disposée entre la couche (3) de matière synthétique et la partie métallique (2) au moins dans certaines parties au moins sur sa face tournée vers la couche (3) de matière synthétique,
la couche (4) d'agent de renforcement de l'adhérence présentant une épaisseur telle que la couche (4) d'agent de renforcement de l'adhérence fond pendant l'opération de projection de la couche (3) de matière synthétique dans une partie de la surface tournée vers la couche (3) de matière synthétique, de telle sorte que la partie de la surface de la couche (4) de l'agent de renforcement de l'adhérence tournée vers la couche (3) de matière synthétique se soude au moins dans certaines parties à la couche (3) de matière synthétique,
la couche (4) d'agent de renforcement de l'adhérence présentant sur son côté tourné vers la couche (3) de matière synthétique une surface structurée,
**caractérisé en ce que**
sur son côté tourné vers la couche (3) de matière synthétique thermoplastique, la surface structurée de la couche (4) d'agent de renforcement de l'adhérence présente des pics de fusion, les pics du fusion étant réalisés de manière à pouvoir être réalisés dans un processus de formage de la couche (4) d'agent de renforcement de l'adhérence.

2. Composant selon la revendication 1, **caractérisé en ce que** la couche (4) d'agent de renforcement de l'adhérence présente une élasticité telle que les différences de coefficient de dilatation thermique de la partie métallique (2) et de la couche (3) de matière synthétique puissent être compensées largement par l'intermédiaire de la couche (4) de renforcement de l'adhérence.

3. Composant selon la revendication 1, **caractérisé en ce que** la couche (4) d'agent de renforcement de l'adhérence est constituée de plusieurs couches individuelles (4A, 4B), au moins une couche individuelle (4A ou 4B) de la couche (4) d'agent de renforcement de l'adhérence présentant une élasticité telle que les différences de coefficient de dilatation thermique de la partie métallique (2) et de la couche (3) de matière synthétique sont largement supprimées par cette couche individuelle (4A ou 4B).

4. Composant selon la revendication 3, **caractérisé en ce qu'**au moins certaines parties de la couche individuelle (4A) de la couche (4) d'agent de renforcement de l'adhérence tournée vers la partie métallique (2) sont reliées en correspondance mécanique avec la partie métallique (2) et **en ce qu'**au moins certaines parties de la couche individuelle (4B) de la couche (4) d'agent de renforcement de l'adhérence tournée vers la couche (3) de matière synthétique se fondent dans la couche (3) de matière synthétique, au moins une liaison en correspondance mécanique s'établissant entre les différentes couches (4A, 4B) de la couche (4) d'agent de renforcement de l'adhérence.

5. Composant selon l'une des revendications 1 à 4, **caractérisé en ce qu'**au moins dans la partie de surface tournée vers la couche (3) de matière synthétique, la température de fusion de la couche (4) d'agent de renforcement de l'adhérence est inférieure ou égale à la température de fusion de la couche (3) de matière synthétique.

6. Composant selon l'une des revendications 1 à 5, **caractérisé en ce qu'**au moins certaines parties de la couche (4) d'agent de renforcement de l'adhérence présentent un module d'élasticité plus bas et un allongement à la rupture plus élevé que la couche (3) de matière synthétique.

7. Composant selon l'une des revendications 3 à 6, **caractérisé en ce que** la couche individuelle (4A) de la couche (4) d'agent de renforcement de l'adhérence tournée vers la partie métallique (2) est réalisée sous la forme d'un adhésif durcissable.
